# EUROPÄISCHE PATENTANMELDUNG

(11) **EP 2 088 489 A1**
(43) Veröffentlichungstag der Anmeldung: **12.08.2009**
(21) Anmeldenummer: 09001075.2
(22) Anmeldetag: 27.01.2009
(51) Int. Cl.: G05B 19/042

(54) **Verfahren zur Parametrierung einer Automatisierungsvorrichtung**

(30) Priorität: 31.01.2008 DE 102008007138
(71) Anmelder: Phoenix Contact GmbH & Co. KG, 32825 Blomberg (DE)
(72) Erfinder: Horn, Steffen, 32825 Blomberg (DE)
(74) Vertreter: Blumbach - Zinngrebe

(57) **Zusammenfassung**

Die Erfindung betrifft ein Verfahren zur Parametrierung einer Automatisierungsvorrichtung mit dem Schritt des Definierens (101) zumindest eines Steuerungsparameters, um eine Steuerungscharakteristik der Automatisierungsvorrichtung festzulegen, und dem Schritt des Zuweisens (103) eines Vorrichtungsparameters zu dem zumindest einem Steuerungsparameter, um eine Vorrichtungscharakteristik der Automatisierungsvorrichtung festzulegen.

## Beschreibung

Die vorliegende Erfindung betrifft das Gebiet der Steuerungs- bzw. der Automatisierungstechnik.

In modernen Automatisierungssystemen findet zunehmend eine Trennung zwischen einem Steuerungssystem, einem Kommunikationssystem und der Geräteebene statt, wobei im Zuge der Dezentralisierung immer mehr Steuerungsintelligenz in die Feldgeräte integriert wird. In diesem Zusammenhang gewinnt die Parametrierung der Gerätefunktionen immer mehr an Bedeutung, damit eine sichere Systemfunktionsweise gewährleistet wird.

Bei den bekannten Automatisierungssystemen werden oft proprietäre Mechanismen der integrierten Geräteparametrierung eingesetzt, so dass Fremdgeräte, die über diese proprietären Mechanismen nicht verfügen, nicht eingesetzt werden können. Aus diesem Grund ist eine offene und standardmäßige Ausführung von Schnittstellen von Bedeutung, wobei eine bestmöglich integrierte Parametrierung von Fremdgeräten essenziell ist.

Aufgrund der Trennung der Steuerungsebene und der Geräte- bzw. der Vorrichtungsebene werden die notwendigen Parametrierungsschritte oft getrennt ausgeführt. So wird beispielsweise auf der Steuerungsebene die Steuerung und auf der Geräteebene das Gerät parametriert. In der Steuerung werden ferner variablen verwendet, welche beispielsweise einen I/O-Bezug zu den Kanälen auf den jeweiligen Geräten haben. Diese Kanäle müssen vor dem Betrieb des jeweiligen Gerätes parametriert werden, damit sie benutzt werden können. Denn erst durch die Parametrierung erhalten diese Kanäle auf den Geräten ihre Funktion.

Die Trennung der beiden vorstehend genannten Handhabungsschritte ist daher zumindest in Automatisierungsanlagen problematisch, da sie mit einem unterschiedlichen Tooling, mit einer unterschiedlichen Projektablage sowie mit einer Inkonsistenz der Geräteparametrierung und der Steuerungsparametrierung führen können.

Es ist die Aufgabe der vorliegenden Erfindung, ein effizientes Konzept zur Geräte- und Steuerungsparametrierung einer Automatisierungsvorrichtung zu schaffen.

Diese Aufgabe wird durch die Merkmale der unabhängigen Patentansprüche gelöst.

Die Erfindung basiert auf der Erkenntnis, dass eine effiziente Parametrierung einer Automatisierungsvorrichtung dann durchgeführt werden kann, wenn die Steuerungsparametrierung und die Geräte- bzw. die Vorrichtungsparametrierung gemeinsam bzw. bevorzugt in einem Schritt durchgeführt werden können. Somit kann eine effiziente Integration der Geräte- bzw. der Kanalparametrierung in Steuerungen mit vereinfachten Handhabungsabläufen und verringerter Wahrscheinlichkeit von Anwendungsfehlern, was vorteilhaft u.a. bei Parametrierung von sicherheitsrelevanten Geräten ist, erreicht werden. Die Parametrierung kann mittels eines Computerprogramms ausgeführt werden, sodass gemäß einer Ausführungsform unter der Parametrierung einer Automatisierungsvorrichtung die Programmierung derselben verstanden werden kann.

Gemäß einem Aspekt betrifft die Erfindung ein Verfahren zur Parametrierung einer Automatisierungsvorrichtung, mit dem Schritt des Definierens zumindest eines Steuerungsparameters, um eine Steuerungscharakteristik der Automatisierungsvorrichtung festzulegen, und dem Schritt des Zuweisens eines Vorrichtungsparameters zu dem zumindest einem Steuerungsparameter, um eine Vorrichtungscharakteristik der Automatisierungsvorrichtung festzulegen.

Gemäß einer Ausführungsform umfasst das Verfahren das Zuweisen der Vorrichtungscharakteristik zu der Automatisierungsvorrichtung ansprechend auf das Zuweisen des Automatisierungsvorrichtungsparameters zu dem zumindest einem Steuerungsparameter.

Gemäß einer Ausführungsform werden die Schritte des Definierens und des Zuweisens in einem gemeinsamen Arbeitsschritt ausgeführt.

Gemäß einer Ausführungsform umfasst der Vorrichtungsparameter einen Filterparameter oder einen Sensorparameter oder einen Spannungsversorgungsparameter oder einen Ausgabeparameter oder einen Eingabeparameter oder einen Testparameter oder einen Inbetriebnahmeparameter der Automatisierungsvorrichtung.

Gemäß einer Ausführungsform umfasst der Steuerungsparameter zumindest eine Steuerungsvariable.

Gemäß einer Ausführungsform können das Definieren des zumindest einen Steuerungsparameters und das Zuweisen des Automatisierungsvorrichtungsattributs in einem Steuerungsprogramm vorgenommen werden.

Gemäß einem Aspekt betrifft die Erfindung eine programmtechnisch eingerichtete Automatisierungsvorrichtung, die ausgebildet ist, ein Steuerungsprogramm auszuführen, wobei beim Ausführen des Steuerprogramms zumindest ein Steuerungsparameter der Automatisierungsvorrichtung zum Festlegen der Steuerungscharakteristik der Automatisierungsvorrichtung eingebbar ist und wobei zu dem zumindest einem Steuerungsparameter ein Vorrichtungsparameter zum Festlegen einer Vorrichtungscharakteristik der Automatisierungsvorrichtung zuweisbar ist.

Gemäß einer Ausführungsform ist die programmtechnisch eingerichtete Automatisierungsvorrichtung ferner ausgebildet, das Steuerungsprogramm zum Ausführen des Verfahrens zur Parametrierung einer Automatisierungsvorrichtung auszuführen.

Gemäß einem Aspekt betrifft die Erfindung eine parametrierbare Automatisierungsvorrichtung zum Steuern eines Prozesses, mit einer Schnittstelle zum Eingeben eines Steuerungsparameters, um eine Steuerungscharakteristik der Automatisierungsvorrichtung festzulegen, und zum Eingeben eines vorrichtungsparameters, um eine Vorrichtungscharakteristik der Automatisierungsvorrichtung festzulegen, und einem Prozessor zum Einstellen eines Betriebszustandes der Automatisierungsvorrichtung ansprechend auf den Vorrichtungsparameter.

Gemäß einer Ausführungsform ist die parametrierbare Automatisierungsvorrichtung ausgebildet, einen Prozess unter Verwendung des Steuerungsparameters zu steuern.

Gemäß einem Aspekt betrifft die Erfindung ein Steuerungsprogramm zur Parametrierung einer Automatisierungsvorrichtung mit einem Programmcode zum Ausführen des erfindungsgemäßen Verfahrens, wenn das Programm auf einem Rechner abläuft.

Weitere Ausführungsbeispiele werden Bezug nehmend auf die beigefügten Zeichnungen näher erläutert. Es zeigen:
- Fig. 1: ein vereinfachtes Ablaufdiagramm eines Verfahrens zur Parametrierung einer Automatisierungsvorrichtung;
- Fig. 2: ein Programmeingabefeld;
- Fig. 3: ein Programmeingabefeld; und
- Fig. 4: ein Programmeingabefeld.

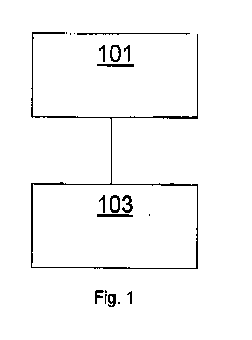

Fig. 1 verdeutlicht die Parametrierung einer nicht dargestellten Automatisierungsvorrichtung, wobei im Schritt 101 zumindest ein Steuerungsparameter der Automatisierungsvorrichtung festgelegt wird, der eine Steuerungscharakteristik derselben festlegt. Somit können im Schritt 101 die Deklaration bzw. die Festlegung der Steuerungsvariablen oder Steuerungsparameter sowie die eigentliche Steuerungsprogrammierung durchgeführt werden

Im Schritt 103 wird ein Vorrichtungsparameter zu dem Steuerungsparameter zugewiesen, um eine Vorrichtungscharakteristik festzulegen. Somit wird sowohl die Steuerungs- als auch die Geräteebene gemeinsam parametriert. So können beispielsweise alle applikationsspezifischen Parametrierungen eines Endgerätes bzw. eines Kanals direkt bei der Variablen-Deklaration beispielsweise in einem Steuerungsprogramm vorgenommen werden.

Der Anwender kann beispielsweise bei der Variablen-Deklaration den Datentyp nach beispielsweise IEC 61131 und gegebenenfalls eine Adresse oder eine Verbindung zu einem Klemmpunkt definieren. Dabei ist es vorteilhaft, Variablen mit bestimmten Eigenschaften zu versehen, die beispielsweise als Attribute beschrieben sein können. Dabei kann es sich beispielsweise um einen SIL-Level (SIL: Safety Integrity Level) oder um eine Kanaligkeit für SafeeBool-Variablen, um Filterzeiten von Eingängen oder um Distanzen bzw. Abstände von Sensoren handeln

Bevorzugt kann ein Benutzer bei immer wieder vorkommenden Kanaleigenschaften beispielsweise bei einer Sensorik in einem I/O-Link eine Art Kanaldatentyp als einen Vorrichtungsparameter definieren, der später bei der Deklaration der Variablen des Steuerungsprogramms zugewiesen werden kann. Bei dem Kanaldatentyp kann es sich beispielsweise um einen gerätespezifischen Parameter oder um einen Parametersatz handeln, der die Kanaleigenschaften festlegt. Bevorzugt ist das System derart beschaffen, dass beispielsweise eine einmalige Eingabe ausreichend ist, so dass das System automatisch dafür Sorge trägt, dass der jeweilige I/O-Kanal, welcher beispielsweise mit der jeweiligen Variablen verknüpft ist, beispielsweise automatisch die passende Parametrierung erhält. Dadurch kann beispielsweise bei einem Gerätetausch die Gerätehandhabung sowie die Parametrierung, die Programmierung, die Inbetriebnahme und der Test der Parametrierung vereinfacht werden.

Gemäß einer Ausführungsform können die Programmierung, die Geräteparametrierung sowie die Verdrahtung bzw. die Bereitstellung von Anschlüssen zu einem Handhabungsschritt zusammengefasst werden. Diese Schritte können jedoch separat ausgeführt werden. Darüber hinaus ermöglicht das erfindungsgemäße Konzept, das zumindest beispielsweise in einem Programmiersystem eingebettet sein kann, auch die Verwaltung des mit der jeweiligen Variablen verknüpften I/O-Kanals, wobei die Verwaltung beispielsweise den Parametrierungsvorgang selbst oder Plausibilitätsüberprüfungen der Kanalparametrierung oder Plausibilitätsüberprüfungen der Verwendung eines Signals in einem Programm, wie beispielsweise die Überprüfung der Verwendung des zweikanaligen SIL-3-Eingangs, umfasst. Die Verwaltung kann ferner die Speicherung der Parametrierungswerte oder den automatischen Download der Parametrierungswerte zu einem entsprechenden Kanal bei Bedarf, im Anlauf, bei Gerätetausch, nach Geräteanforderung und programmgesteuert umfassen.

Die erfindungsgemäße Automatisierungsvorrichtung umfasst beispielsweise eine Steuerungsvorrichtung und optional ein Kommunikationssystem mit einem Feldbus und/oder einer Ethernet-Funktionalität. Die Automatisierungsvorrichtung ist derart beschaffen, dass die Vorrichtungscharakteristik wie beispielsweise die Geräte- und/oder die Kanalparametrierung gemeinsam beispielsweise in einem Verarbeitungsschritt mit der Variablen-Deklaration bezüglich der Steuerungscharakteristik beispielsweise direkt in einem Engineering-Fenster des Steuerungsprogramms vorgenommen werden kann.

Bei den Vorrichtungsparametern kann es sich beispielsweise um eine Angabe handeln, ob ein Kanal belegt oder nicht belegt ist, ob ein Anschluss einkanalig oder zweikanalig ist, ob die Sensorart eine intelligente Sensorart oder eine standardmäßige Sensorart ist oder welche Überwachungszeiten für eine Reaktionszeit vorgesehen sind. Darüber hinaus kann die Vorrichtungscharakteristik die Zuordnung von Taktung der einzelnen Kanäle beispielsweise zwecks Kurz- und/oder Querflusserkennung oder Diskrepanzzeiten umfassen. Darüber hinaus kann die Vorrichtungscharakteristik die Angabe enthalten, ob eine Diskrepanzüberwachung ein- oder ausgeschaltet ist.

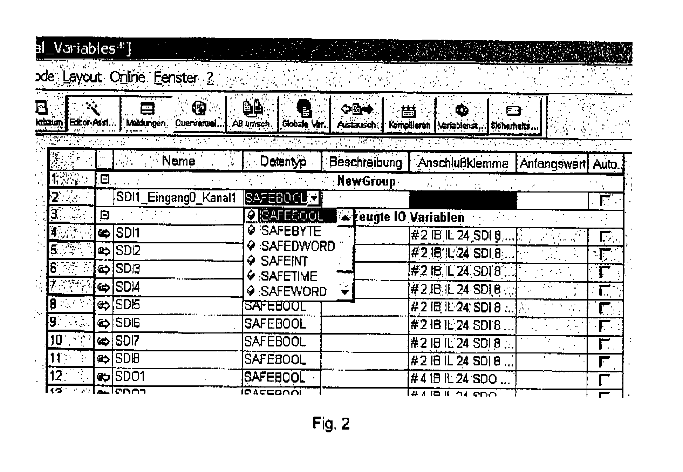

In den Figuren 2, 3 und 4 sind anhand von programmgesteuerten Eingabemasken die Verfahrensschritte, die erfindungsgemäß gemeinsam durchgeführt werden können, separat verdeutlicht.

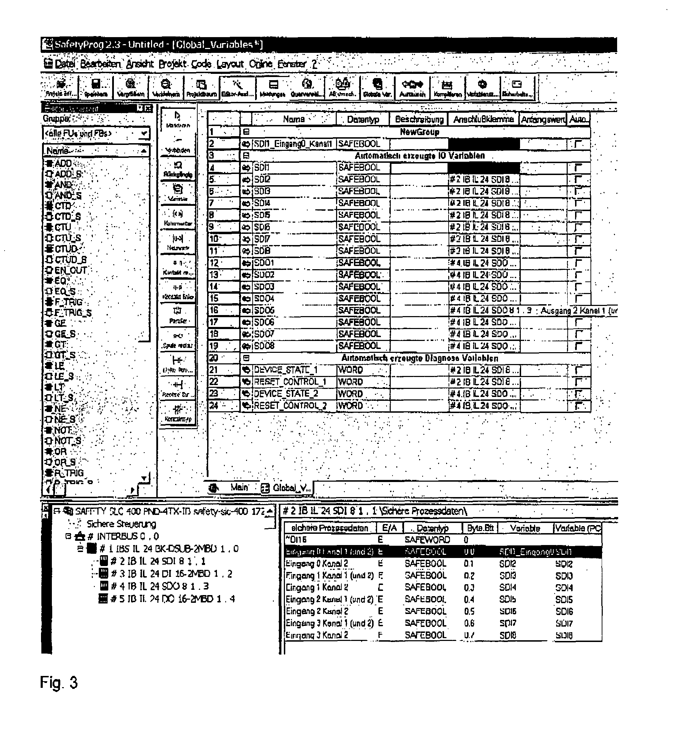

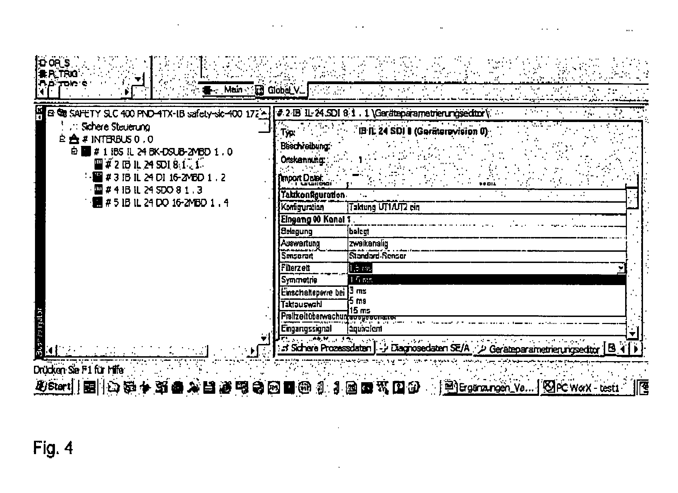

Wie in Fig. 2 dargestellt, kann zunächst eine Variable in einem Steuerungsprogramm gemeinsam mit der Festlegung eines Datentyps der Variablen, beispielsweise SafeBool angelegt werden. In einem weiteren Schritt kann diese Variable zu einem I/O-Kanal der Peripherie zugeordnet werden, wie es in Fig. 3 dargestellt ist. In einem weiteren Schritt, der in Fig. 4 verdeutlicht ist, kann die Geräte- oder die Kanalparametrierung vorgenommen werden. Bei den Geräteparametern kann es sich beispielsweise um eine Filterzeit von 1,5 ms, um eine Symmetrie von 1,5 ms, um eine Einschaltsperre bei beispielsweise 3 ms, um eine Taktauswahl bei beispielsweise 5 ms oder um eine Prellzeitüberwachung bei beispielsweise 15 ms handeln. Dabei sind die Zeitintervalle beliebig innerhalb vorgegebener Grenzen einstellbar.

Bei einer gemeinsamen Ausführung der vorstehend genannten Verfahrensschritte kann in dem Verfahrensschritt aus Fig. 2 verhindert werden, dass der falsche Datentyp angelegt wird. In dem zweiten Verfahrensschritt aus Fig. 3 kann eine falsche oder gar eine mehrfache Zuordnung des Datentyps ausgeschlossen werden werden. In dem dritten Verfahrensschritt aus Fig. 4 kann beispielsweise eine fehlerhafte Parametrierung oder eine fehlerhafte Zuordnung des Kanals unterbunden werden, so dass die Systemsicherheit insgesamt erhöht wird.

Erfindungsgemäß können die in den Figuren 2, 3 und 4 dargestellten Arbeitsschritte zusammengefasst und in einer gemeinsamen Maske dargestellt werden. Zuerst wird ein bestimmtes Parametrierungsprofil festgelegt, das beispielsweise einen Parametersatz, einen Parametertyp oder einen erweiterten Datentyp jeweils mit beispielsweise einer eindeutigen Kennung umfasst. Beim Anlegen der Variable wird bevorzugt nicht nur deren Datentyp, sondern auch das dazugehörige Parametrierungsprofil mit beispielsweise einem Parametertyp oder einem erweiterten Datentyp festgelegt. Die Profil- bzw. die Parameterübermittlung kann dem System überlassen werden, das beispielsweise bei einem Systemstart oder einem Gerätetausch die Parametrierung unter Verwendung eines automatischen Downloads ermöglicht. Bezug nehmend auf Fig. 2 könnte dies beispielsweise durch eine neue Spalte "Parameterprofil" neben der Spalte "Datentyp" mit den Auswahlmöglichkeiten SafeBool, SafeInt etc. von in der ersten Auswahlbox unterstützt werden. Bevorzugt können dort ebenfalls vordefinierte oder selbstdefinierbare Parametrierungsprofile für bestimmte Applikationen, wie beispielsweise eine Notausschaltung oder für eine Schutztür einem Benutzer zur Verfügung gestellt werden. Das angelegte Parameterprofil kann beispielsweise statisch einem Kanal zugeordnet und einmalig bei einem Systemstart übertragen werden. Bei einem Gerätetausch kann genau dieser Parametersatz erneut übertragen werden. Für dynamische Parameteränderungen während eines Betriebs, beispielsweise für dynamische Umparametrierungen eines Kanals, wird beispielsweise einem Applikationsprogramm Zugriff auf diesen Parametersatz oder zumindest auf eine Kennung des Parametersatzes gewährt. Dadurch kann die Parametrierung automatisch und dynamisch erfolgen.

## Patentansprüche

1. Verfahren zur Parametrierung einer Automatisierungsvorrichtung, mit:
Definieren (101) zumindest eines Steuerungsparameters, um eine Steuerungscharakteristik der Automatisierungsvorrichtung festzulegen; und
Zuweisen (103) eines Vorrichtungsparameters zu dem zumindest einem Steuerungsparameter, um eine Vorrichtungscharakteristik der Automatisierungsvorrichtung festzulegen.

2. Verfahren gemäß Anspruch 1, wobei der Schritt des Definierens (103) und der Schritt des Zuweisens (103) in einem gemeinsamen Arbeitsschritt ausgeführt werden.

3. Verfahren gemäß Anspruch 1 oder 2, mit:
Zuweisen der Vorrichtungscharakteristik zu der Automatisierungsvorrichtung ansprechend auf das Zuweisen des Automatisierungsvorrichtungsparameters zu dem zumindest einem Steuerungsparameter.

4. Verfahren gemäß einem der Ansprüche 1 bis 3, wobei der Vorrichtungsparameter einen Filterparameter oder einen Sensorparameter oder einen Spannungsversorgungsparameter oder einen Ausgabeparameter oder einen Eingabeparameter oder einen Testparameter oder einen Inbetriebnahmeparameter der Automatisierungsvorrichtung umfasst.

5. Verfahren gemäß einem der Ansprüche 1 bis 4, wobei der Steuerungsparameter zumindest eine Steuerungsvariable umfasst.

6. verfahren gemäß einem der Ansprüche 1 bis 5, wobei das Definieren (101) des zumindest einen Steuerungsparameters und das Zuweisen (103) des Automatisierungsvorrichtungsattributs in einem Steuerungsprogramm vorgenommen werden.

7. Programmtechnisch eingerichtete Automatisierungsvorrichtung, die ausgebildet ist, ein Steuerungsprogramm auszuführen, wobei beim Ausführen des Steuerprogramms zumindest ein Steuerungsparameter der Automatisierungsvorrichtung zum Festlegen der Steuerungscharakteristik der Automatisierungsvorrichtung eingebbar ist und wobei zu dem zumindest einem Steuerungsparameter ein Vorrichtungsparameter zum Festlegen einer Vorrichtungscharakteristik der Automatisierungsvorrichtung zuweisbar ist.

8. Programmtechnisch eingerichtete Automatisierungsvorrichtung gemäß Anspruch 7, die ferner ausgebildet ist, das Steuerungsprogramm zum Ausführen des Verfahrens gemäß einem der Ansprüche 1 bis 6 auszuführen.

9. Parametrierbare Automatisierungsvorrichtung mit:
einer Schnittstelle zum Eingeben eines Steuerungsparameters, um eine Steuerungscharakteristik der Automatisierungsvorrichtung festzulegen, und zum Eingeben eines Vorrichtungsparameters, um eine Vorrichtungscharakteristik der Automatisierungsvorrichtung festzulegen; und
einem Prozessor zum Einstellen eines Betriebszustandes der Automatisierungsvorrichtung ansprechend auf den Vorrichtungsparameter.

10. Parametrierbare Automatisierungsvorrichtung gemäß Anspruch 9, die ausgebildet ist, einen Prozess unter Verwendung des Steuerungsparameters zu steuern.

11. Steuerungsprogramm zur Parametrierung einer Automatisierungsvorrichtung mit einem Programmcode zum Ausführen des Verfahrens gemäß einem der Ansprüche 1 bis 6, wenn das Programm auf einem Rechner abläuft.
